# EUROPÄISCHE PATENTSCHRIFT

(11) **EP 0 726 410 B1**
(45) Veröffentlichungstag und Bekanntmachung des Hinweises auf die Patenterteilung: **28.03.2001**
(21) Anmeldenummer: 95120757.0
(22) Anmeldetag: 23.12.1995
(51) Int. Cl.: F16F 15/08, F02M 35/04

(54) **Schwingungsdämpfendes Befestigungselement an einer Brennkraftmaschine**
Oscillation damping fastener on an internal combustion engine
Support amortisseur de vibrations sur un moteur à combustion interne

(30) Priorität: 07.02.1995 DE 19503918
(43) Veröffentlichungstag der Anmeldung: 14.08.1996
(73) Patentinhaber: DaimlerChrysler AG, 70567 Stuttgart (DE)
(72) Erfinder: Howe, Thomas, Dipl.-Ing., D-73733 Esslingen (DE); Schütz, Berndt, Dipl.-Ing., D-70327 Stuttgart (DE)

(56) Entgegenhaltungen:
- CH-A- 348 387
- DE-A- 2 809 919
- DE-A- 4 306 588
- DE-C- 4 324 099
- DE-U- 7 509 767
- DE-U- 9 210 095
- FR-A- 802 277
- FR-A- 1 433 519
- US-A- 3 353 341
- PATENT ABSTRACTS OF JAPAN vol. 009, no. 187 (M-401), 3.August 1985 & JP-A-60 053243 (TOYOTA JIDOSHA KK), 26.März 1985,

## Beschreibung

Die Erfindung betrifft ein schwingungsdämpfendes Befestigungselement zur Halterung eines Bauteils an einem Halteteil einer Brennkraftmaschine, insbesondere zur Halterung eines Luftfilters am Motorgehäuse der Brennkraftmaschine, nach dem Oberbegriff des Anspruches 1.

Aus der DE-PS 582 942 ist ein derartiges Befestigungselement bekannt, das zur Schwingungsdämpfung und Isolation zwischen dem Wagenkasten und dem Rahmen eines Kraftfahrzeuges angeordnet ist. Am Wagenkasten ist ein Fortsatz mit einem Kugelkopf befestigt, der formschlüssig in eine Ausnehmung eines elastischen, gummiartigen Formstückes einragt. Das elastische Formstück ermöglicht eine Relativbewegung zwischen dem Wagenkasten und dem Rahmen; zugleich dämpft das elastische Formstück die auftretenden Relativschwingungen höherer Frequenz.

Um die Haltekraft der Verbindung zu erhöhen, ist vorgesehen, den Druck des elastischen Formstückes auf den Fortsatz durch Einschrauben eines Schraubengliedes in den Formstückkörper zu erhöhen. Dies macht es notwendig, das Formstück in einem allseits geschlossenen Kasten anzuordnen, damit der von dem Schraubenglied ausgeübte Druck auf den Kopf des Fortsatzes gerichtet wird. Die Vorrichtung ist dadurch aufwendig gestaltet, und es sind mehrere Montageschritte notwendig, um eine kraftübertragende Verbindung herzustellen. Eine Demontage der Verbindung ist nur möglich, wenn der Druck des elastischen Formstückes auf den Fortsatz durch Herausdrehen des Schraubengliedes verringert wird.

Weiterhin ist nachteilig, daß durch das Eindrehen des Schraubengliedes der Formstückkörper örtlich zerstört wird, wodurch die Lebensdauer des Formstückes begrenzt ist.

Der Erfindung liegt die Aufgabe zugrunde, ein schwingungsdämpfendes Befestigungselement an einer Brennkraftmaschine zur Halterung eines Bauteils an einem Halteteil zu schaffen, das bei guten Dämpfungseigenschaften und einfachem Aufbau schnell und einfach montiert und kostengünstig hergestellt werden kann.

Diese Aufgabe wird bei einem Befestigungselement nach Gattungsbegriff mit den Merkmalen des Anspruches 1 gelöst.

Aufgrund der winkligen Anordnung des Fortsatzes, gemessen zur Löserichtung des abzustützenden Bauteiles, kann die Montage der Halterung ohne weiteres in Längsrichtung des Fortsatzes durchgeführt werden. Dagegen erfolgt das Lösen des Bauteiles unter einem Winkel zur Längsrichtung des Fortsatzes; in Löserichtung besteht ein elastisch nachgiebiger Formschluß, wodurch eine feste Verbindung zwischen dem Bauteil und dem Halteteil gegeben ist.

Der elastisch nachgiebige Formschluß besteht zweckmäßig zwischen dem Formstück und dem am Halteteil befestigten Fortsatz. Das Formstück weist hierzu eine Ausnehmung auf, in die der Fortsatz in Längsrichtung eingesteckt ist. Das elastische Formstück ist nach Art einer Steckverbindung auf den mit dem Halteteil verbundenen Fortsatz aufsetzbar, wobei der Fortsatz fest in der Ausnehmung festgeklemmt ist, um die Verbindung zwischen dem Formstück und dem Fortsatz nur unter erhöhtem Kraftaufwand lösen zu können. Der Fortsatz kann direkt am Motorblock der Brennkraftmaschine angegossen werden. Dies hat den Vorteil, daß beispielsweise ein abzustützender Luftfilter unter Vermeidung einer zwischenliegenden Haltestütze direkt am Motorgehäuse der Brennkraftmaschine befestigt werden kann.

Zur Erhöhung der Lösekraft kann der Fortsatz spielfrei in der Ausnehmung des Formstücks gehalten sein.

Vorteilhaft sind zumindest zwei das Bauteil haltende Formstücke vorgesehen. Die in die jeweiligen Formstücke eingreifenden Fortsätze sind zweckmäßig symmetrisch bezüglich einer Mittelebene angeordnet, welche sich etwa lotrecht zur Oberfläche des abzustützenden Bauteiles erstreckt und zu der die Löserichtung etwa parallel gerichtet ist. Vorzugsweise beträgt der Winkel zwischen der Längsachse jedes Fortsatzes und der Mittelebene etwa 20° bis 50°, insbesondere etwa 45°, so daß die zwei Fortsätze etwa rechtwinklig zueinander angeordnet sind. Aufgrund der Verbindung von zwei Fortsätzen mit aufgesteckten Formstücken erhält man eine gleichmäßige Abstützung; außerdem ist die Löserichtung zwangsweise vorgegeben, da nur in der Richtung senkrecht zur Oberfläche des abzustützenden Bauteiles eine Demontage möglich ist. Dagegen wird eine Bewegung seitlich zur Löserichtung von dem die Begrenzungswände der Ausnehmungen umgebenden Material kompensiert, so daß Schwingungen und Motorvibrationen zuverlässig gedämpft werden. Ein unbeabsichtigtes Lösen des Bauteiles ist wegen der zwangsweisen Vorgabe der Löserichtung verhindert.

An dem Formstück ist vorzugsweise auf der dem Fortsatz zugewandten Seite eine Spreizlippe ausgebildet, die an der Mantelfläche des Fortsatzes anliegt und diesen festklemmt. Die Spreizlippe ist bevorzugt auf der der Mittelebene abgewandten Seite des Fortsatzes angeordnet, so daß die Spreizlippe zum Lösen des Bauteiles aufgebogen werden muß, damit der Fortsatz aus der Ausnehmung herausgenommen werden kann. Umgekehrt wird die Spreizlippe beim Einstecken des Fortsatzes nur um ein geringes Maß nach innen in einen mit der Ausnehmung kommunizierenden Freiraum gebogen, so daß die Lösekraft die zum Einstecken benötigte Kraft übersteigt. Die Demontage des Bauteils in Löserichtung erfolgt demnach unter Überwindung eines elastisch nachgiebigen Formschlusses zwischen dem Formstück und dem Fortsatz oder dem Bauteil.

Es kann zweckmäßig sein, den elastisch nachgiebigen Formschluß zwischen dem Formstück und dem Bauteil vorzusehen. Gemäß einer weiteren Ausführung ist hierbei der Formschluß zwischen dem Formstück und einer Halteklammer gebildet, die am abzustützenden Bauteil festgelegt ist und die vorteilhaft mit zwei Bügeln in eine Hinterschneidung am Formstück eingreift. Diese Ausführung zeichnet sich durch eine große Toleranz beim Zusammenbau aus.

Das elastische Formstück ist vorteilhaft bei dieser Ausführung unverlierbar an dem Fortsatz gehalten. Das Formstück ist zweckmäßig ein Verbundwerkstoff und ist als Gummi/Metall-Puffer ausgebildet, der aus einem Metallsockel mit aufgesetztem Gummikopf besteht. Der Metallsockel kann mit dem Fortsatz verschraubt werden.

Weitere vorteilhafte Ausgestaltungen und Weiterbildungen der Erfindung sind den weiteren Ansprüchen, der Beschreibung und den Figuren zu entnehmen, in denen Ausführungsbeispiele der Erfindung dargestellt sind. Es zeigen:
- Fig. 1: einen Schnitt durch ein Luftfiltergehäuse, das über Befestigungselemente an einem Motorgehäuse gehalten ist,
- Fig. 2: eine Teilansicht aus Fig. 1 mit aufgebogener Spreizlippe des Befestigungselementes,
- Fig. 3: eine perspektivische Ansicht eines Luftfilters mit mehreren Befestigungselementen,
- Fig. 4: eine Draufsicht auf den Luftfilter nach Fig. 3,
- Fig. 5: das Befestigungselement in einer anderen Ausführung,
- Fig. 6 und 7: das Befestigungselement aus Fig. 5 in weiteren Darstellungen,
- Fig. 8: eine perspektivische Ansicht eines Luftfilters mit mehreren Befestigungselementen gemäß Fig. 5,
- Fig. 9: eine Seitenansicht des Luftfilters aus Fig. 8,
- Fig. 10: eine weitere Seitenansicht des Luftfilters aus Fig. 8.

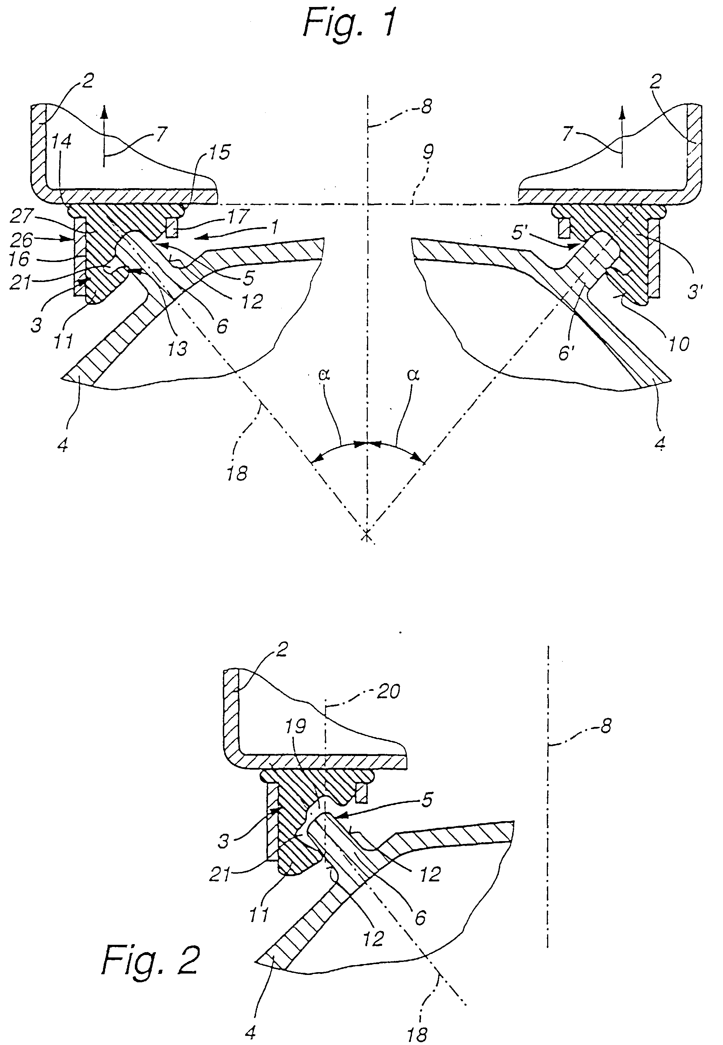

Fig. 1 zeigt ein Befestigungselement 1, das fest mit einem als Luftfilter ausgebildeten Bauteil 2 verbunden ist und den Luftfilter an einem Halteteil 4 - im Ausführungsbeispiel das Gehäuse eines Motorblocks - abstützt. Das Befestigungselement 1 besteht aus einem elastischen Formstück 3, in das eine Ausnehmung 5 eingebracht ist, in die ein einteilig mit dem Motorgehäuse 4 ausgebildeter Fortsatz 6 eingreift. Zweckmäßig ist der Fortsatz 6 mit Reibschluß spielfrei in der Ausnehmung 5 gehalten, indem Fortsatz und Ausnehmung etwa komplementär geformt sind und der Fortsatz ein geringes Übermaß aufweist.

Das Formstück 3 ist unverlierbar am Gehäuse des Luftfilters 2 gehalten, indem eine überstehende Auskragung 14, 15 am Fuß des Formstücks 3 auf der dem Luftfilter zugewandten Seite in jeweils eine Nut eingeknüpft ist, die zwischen der Oberfläche 9 des Luftfilters und zwei mit dem Luftfiltergehäuse verbundenen Haltebügeln 16, 17 einer Befestigungsklammer 26 ausgespart ist. Zweckmäßig ist die Befestigungsklammer 26 einteilig mit dem Luftfiltergehäuse ausgebildet.

Das elastische Formstück 3 kann auch durch sonstige geeignete Befestigungsmaßnahmen wie Kleben, Schrauben oder ähnliches am Luftfiltergehäuse gehalten sein. Die Befestigung kann durch Stoffschluß, Kraftschluß oder Formschluß erfolgen.

Der fest mit dem Motorgehäuse 4 verbundene Fortsatz 6 greift in die Ausnehmung 5 ein, wobei in Löserichtung 7 zwischen Ausnehmung 5 und Fortsatz 6 ein Formschluß besteht. Außer einer reibschlüssigen Anlage des Fortsatzes 6 am Innenmantel der Ausnehmung 5 ist in Löserichtung 7 gesehen auch ein Formschluß zwischen Fortsatz und Ausnehmung gegeben. Der Fortsatz 6 ist hierfür in einem Winkel α von vorzugsweise etwa 12° bis 60°, insbesondere etwa 20° bis 50°, zur Löserichtung 7 des Luftfilters 2 angeordnet, im Ausführungsbeispiel nach Fig. 1 beträgt der Winkel α etwa 40°. Wie Fig. 1 weiter zu entnehmen, schließt die Längsachse 18 des Fortsatzes 6 mit einer Mittelebene 8 lotrecht zur Oberfläche 9 des Luftfilters den Winkel α ein, wobei die Löserichtung 7 parallel zur Mittelebene 8 liegt. Aufgrund der winkligen Anordnung von Löserichtung und Fortsatz bzw. Ausnehmung ist in der Ausnehmung 5 ein Hinterschneidungsraum 19 gebildet, Fig. 2, in den der vordere Teil des Fortsatzes 6 einragt. Der Hinterschneidungsraum 19 erstreckt sich auf seiner der Mittelebene 8 zugewandten Seite bis zu einer Begrenzungsebene 20, die parallel zur Mittelebene 8 liegt und durch den dem Fuß des Formstücks nächstgelegenen Punkt der Ausnehmung 5 verläuft. Zur Demontage wird der Luftfilter in Löserichtung 7 angehoben, wobei infolge des Formschlusses zwischen Fortsatz und Ausnehmung die der Ausnehmung benachbarten elastischen Wandbereiche mit hoher Kraft etwa lateral zur Längsachse 18 des Fortsatzes 6 weggedrückt werden müssen.

Der Luftfilter 2 ist vorteilhaft über zumindest zwei Formstücke 3, 3' mit in deren Ausnehmungen 5, 5' eingreifenden Fortsätzen 6, 6' am Motorgehäuse 4 gehalten, wobei die Formstücke 3, 3' bezüglich der Mittelebene 8 symmetrisch, vorzugsweise spiegelsymmetrisch angeordnet sind. Neben einer gleichmäßigen Kraftverteilung auf mehrere Befestigungselemente ist hierdurch auch eine zwangsweise Vorgabe der Löserichtung 7 erzielt, da nur eine Bewegung senkrecht zur Oberfläche 9 des Luftfiltergehäuses ein Lösen des Befestigungselementes 1 bewirken kann. Jede seitlich hierzu gerichtete Bewegung hat einen unverhältnismäßig hohen Kraftaufwand zur Folge, da jeder der Fortsätze 6, 6' in den Formstücken 3, 3' gegen seitliche, die Ausnehmung begrenzende Wandbereiche gedrückt wird.

Das Formstück 3 weist im Querschnitt etwa die Form eines rechtwinkligen Dreiecks auf, wobei die Ausnehmung 5 etwa lotrecht an der die Hypotenuse bildenden Längsseite 10 des Dreiecks angeordnet ist. Durch eine unterschiedlich lange Ausbildung der Schmalseiten des Dreiecks können unterschiedlich große Winkel α zwischen der Ausnehmung bzw. dem Fortsatz und der Löserichtung 7 eingeschlossen werden. Die räumliche Gestalt des Formstücks 3 ist zweckmäßig prismenförmig, wobei die Dreiecksseiten die Grundseiten des Prismas bilden.

Wie in den Fig. 1 und 2 dargestellt, kann am Formstück 3 eine Spreizlippe 11 ausgebildet sein, die sich entlang der dem Fortsatz zugewandten Längsseite 10 erstreckt, in die die Ausnehmung 5 eingebracht ist. Die Spreizlippe 11 liegt an der Mantelfläche 12 des in die Ausnehmung einragenden Fortsatzes 6 an und klemmt diesen in der Ausnehmung fest. Zweckmäßig ist innerhalb des Hinterschneidungsraumes 19 ein Freiraum 21 gebildet, durch den die Spreizlippe 11 eine axiale Beweglichkeit in Richtung der Längsachse 18 des Fortsatzes 6 erhält. Der Freiraum 21 als Teil des Hinterschneidungsraums 19 ist zwischen dem Grundkörper 27 des elastischen Formstücks und der Spreizlippe angeordnet. Die einteilig mit dem Formstück 3 ausgebildete Spreizlippe 11 erstreckt sich in Form einer Leiste entlang der Längsseite 10 des Formstückes 3 und liegt vorteilhaft mit ihrer Stirnseite 13 an der Mantelfläche 12 des Fortsatzes 6 an. Jede axiale Bewegung des Fortsatzes 6 in Löserichtung hat eine entsprechende Bewegung der Spreizlippe zur Folge, wobei gemäß Fig. 2 zum Lösen des Befestigungselementes die Spreizlippe 11 stark nach außen aufgeweitet werden muß, wohingegen ein Aufstecken des Formstücks auf den Fortsatz nur eine geringfügige Bewegung der Spreizlippe in Richtung des Freiraumes 21 zur Folge hat. Die Bewegung der Spreizlippe 11 in Richtung Freiraum ist durch die in Richtung der Längsachse 18 gemessene Freiraumtiefe begrenzt; das freie Ende der im Querschnitt etwa hakenförmigen Spreizlippe kann nur um den Betrag der Freiraumteife nach innen in den Freiraum gebogen werden. Die Lösekraft bzw. die den Fortsatz in der Ausnehmung festklemmende Haltekraft ist daher gegenüber der Aufsteck- bzw. Montagekraft deutlich erhöht, so daß einerseits die Montage leicht und schnell erfolgen kann, andererseits aber ausreichend Sicherheit gegenüber unbeabsichtigtem Lösen des Luftfilters gegeben ist.

Vorzugsweise ist die Spreizlippe 11 auf der der Mittelebene 8 abgewandten Seite des Fortsatzes 6 angeordnet, so daß bei einem Lösen des Fortsatzes 6 aus der Ausnehmung 5 heraus infolge des Formschlusses zwischen Fortsatz und Ausnehmung die Spreizlippe 11 zwangsweise aufgebogen wird.

Der Fortsatz 6 kann als zylindrisch geformter Dorn ausgebildet sein, der am Motorgehäuse 4 angegossen sein kann oder in eine Gewindebohrung einschraubbar ist. Gemäß einer anderen Ausführung kann der Fortsatz 6 auch als ein Vorsprung ausgebildet sein, der in Draufsicht eine rechteckförmige Querschnittsgestalt hat, wobei in diesem Fall die Spreizlippe 11 entlang einer sich über die Länge des Vorsprunges erstreckenden Berührlinie an der Mantelfläche des Vorsprunges zur Anlage kommt. Die Haltekraft ist bei dieser Ausbildung des Fortsatzes erhöht.

Das Formstück besteht zweckmäßig aus einem Elastomer bzw. einem gummiähnlichen Material, das beispielsweise durch ein Extrusionsverfahren und anschließendem Zurechtschneiden auf die gewünschte Länge kostengünstig hergestellt werden kann. Eine Nachbearbeitung der Fortsätze kann entfallen, da Unregelmäßigkeiten in der Mantelfläche der Fortsätze durch die Nachgiebigkeit des Formstückes ausgeglichen werden. Rauhigkeiten in der Mantelfläche können sogar den Reibschluß zwischen Fortsatz und Formstück erhöhen.

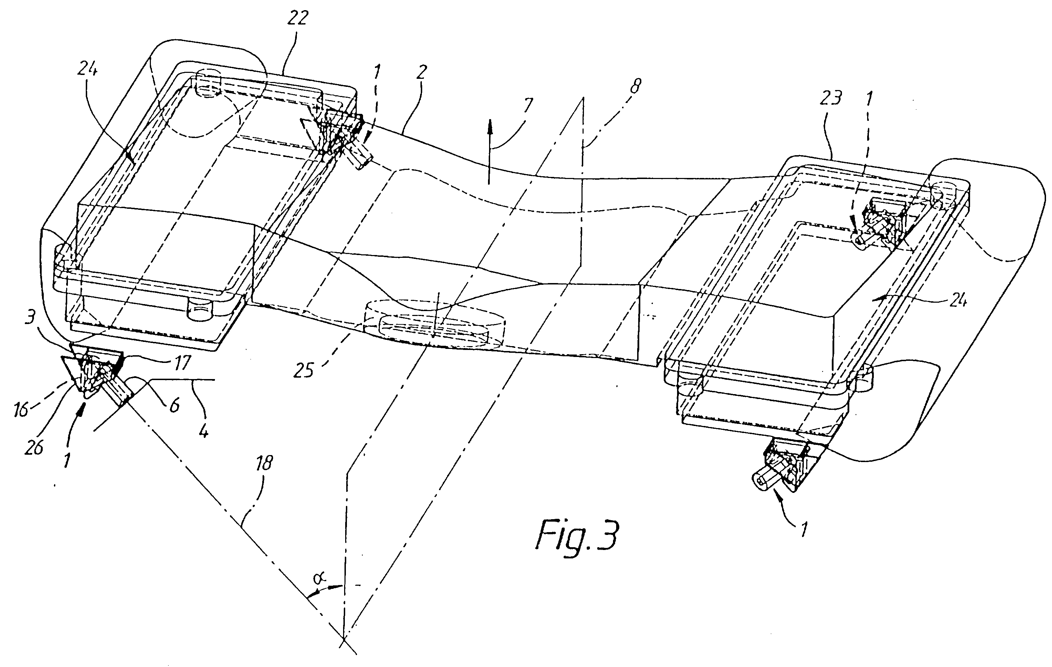

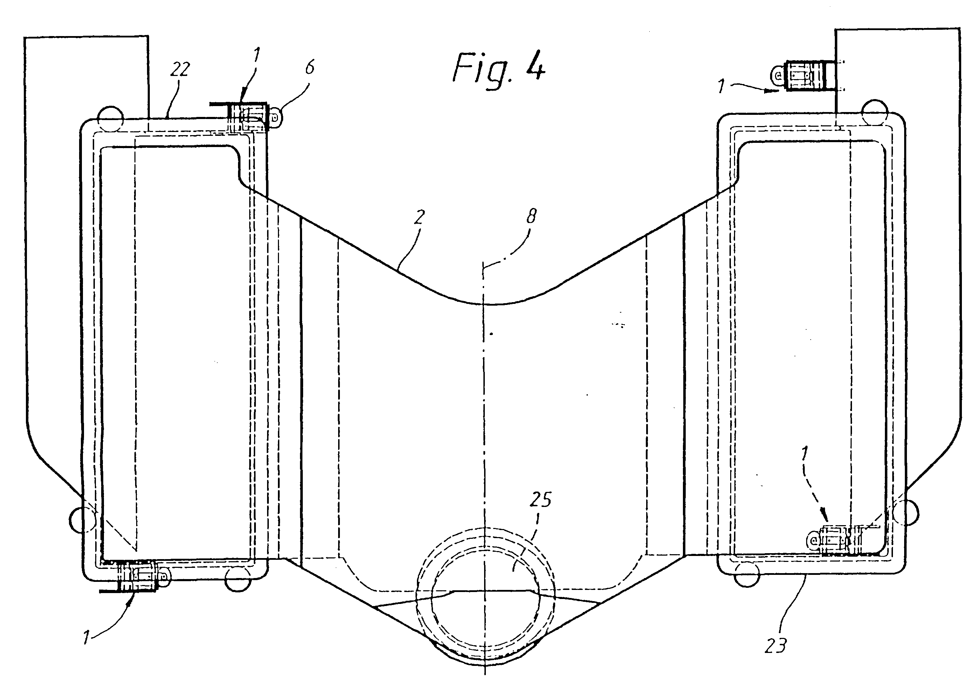

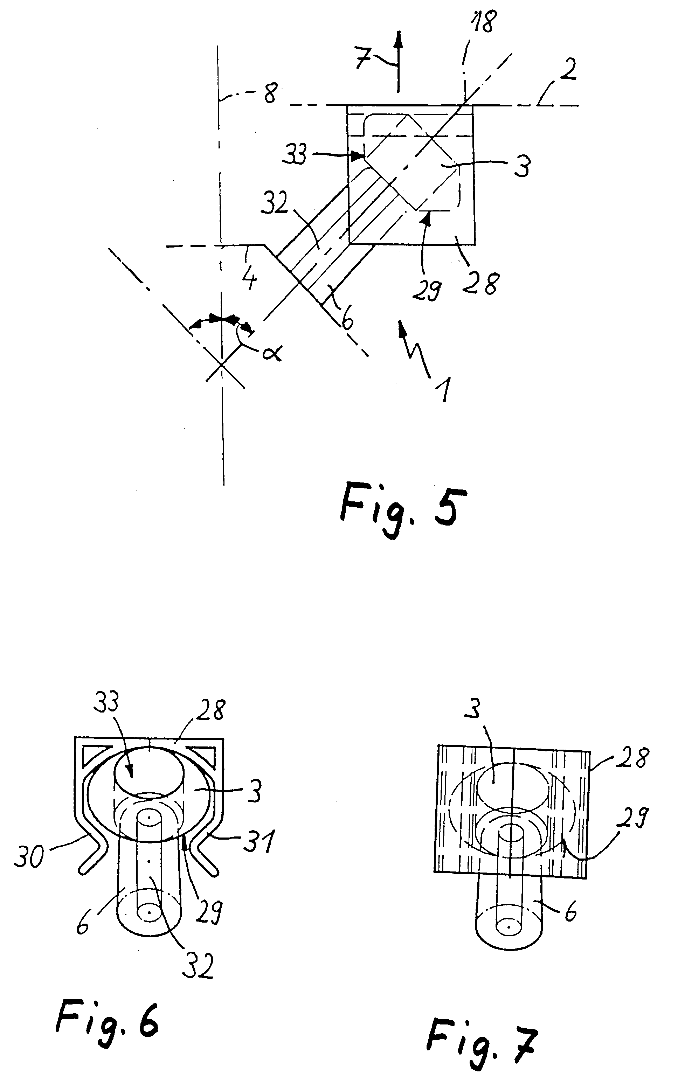

Die Fig. 3 und 4 zeigen eine Gesamtdarstellung eines Luftfilters 2. Der Luftfilter 2 besteht aus zwei seitlichen Ansaugkästen 22 und 23, in die zur Filterung der angesaugten Luft Filterelemente 24 eingesetzt sind. Die gereinigte Luft ist über einen zentralen Abgang 25 dem nicht dargestellten Ansaugkanal der Brennkraftmaschine zugeführt. Auf der dem Motorgehäuse 4 zugewandten Seite sind im Bereich jedes Ansaugkastens 22, 23 jeweils zwei Befestigungselemente 1 angeordnet, über die der Luftfilter am Motorgehäuse abgestützt ist. Die Befestigungselemente 1 umfassen die Befestigungsklammern 26, die fest mit dem Luftfilter verbunden sind und in die die elastischen Formstücke 3 unverlierbar eingeknüpft sind. Die Befestigungsklammern 26 weisen jeweils die Haltebügel 16 und 17 auf, die seitliche Auskragungen des Formstücks 3 festklemmen. In die Ausnehmungen der Formstücke sind die fest mit dem Motorgehäuse 4 verbundenen Fortsätze 6 eingesetzt, deren Längsachsen 18 mit der quer durch den Luftfilter verlaufenden Mittelebene 8 den Winkel α einschließen.

Wie insbesondere der Draufsicht der Fig. 4 zu entnehmen ist, können die bezüglich der Mittelebene 8 diametral einander gegenüberliegenden Befestigungselemente in unterschiedlicher Entfernung zur Mittelebene bzw. seitlich versetzt zueinander liegen. Die Längsachsen 18 aller Fortsätze 6 sind jedoch winklig zur Mittelebene 8 angeordnet, so daß beim Demontieren des Luftfilters 2 vom Motorgehäuse 4 in Löserichtung 7 eine erhöhte Kraft benötigt ist, um die Verbindung von Fortsätzen 6 und elastischen Formstücken 3 zu lösen. Es kann zweckmäßig sein, die Befestigungselemente an jeweils einem Ansaugkasten dergestalt winklig nach innen anzuordnen, daß die Längsachsen der Fortsätze sich in der Mittelebene 8 schneiden und einen rechten Winkel einschließen.

Durch die insgesamt vier Befestigungselemente ist das Gewicht des Luftfilters gleichmäßig auf dem Motorgehäuse verteilt; zudem werden Schwingungen, beispielsweise Motorvibrationen, bei nur minimalem Einbauraum für die Befestigungselemente wirkungsvoll gedämpft.

Die Fig. 5 bis 10 zeigen ein Befestigungselement in einer weiteren Ausführung. An dem Motorgehäuse bzw. Motorblock 4 ist der Fortsatz 6 befestigt, insbesondere als zylindrischer Dorn angegossen. An der Stirnseite des Fortsatzes 6 ist das elastische Formstück 3 befestigt, das formschlüssig in eine Halteklammer 28 eingesteckt ist. Die Halteklammer 28 ist zweckmäßig unverlierbar am Luftfilter 2 gehalten, der in Pfeilrichtung 7 vom Motorblock 4 gelöst werden kann. Die Längsachse 18 des Fortsatzes 6, die die Montagerichtung des in die Halteklammer 28 einzusteckenden Formstückes 3 vorgibt, schließt mit der Mittelebene 8 den Winkel α ein. Die Mittelebene 8, zu der die Löserichtung 7 des Luftfilters 2 parallel gerichtet ist, bildet eine Symmetrieebene für zwei spiegelsymmetrisch angeordnete Befestigungselemente 1. Der Winkel α beträgt im Ausführungsbeispiel knapp 45°.

Der Formschluß zwischen dem elastischen Formstück 3 und der Halteklammer 28 ist dadurch bewirkt, daß das Formstück 3 eine Hinterschneidung 29 aufweist, in die zwei gegenüberliegende Bügel 30, 31 der Halteklammer 28 haltend eingreifen, siehe Fig. 5 bis 7. Das Formstück 3 ist als Gummi/Metall-Puffer ausgebildet und umfaßt einen Metallsockel 32 und einen auf den Metallsockel 32 aufgesetzten und fest verbundenen Gummikopf 33. Der Gummikopf 33 hat einen kreisförmigen Querschnitt und ist insbesondere scheibenförmig ausgebildet, wobei gemäß Fig. 5 der umfangsseitige Rand des scheibenförmigen Gummikopfes 33 einen näherungsweise dreieckförmigen Querschnitt aufweist. Der Metallsockel 32 des Formstücks 3 wird mit dem Fortsatz 6 verschraubt, wodurch das Formstück 3 unverlierbar an dem Fortsatz gehalten ist. Zweckmäßig weist der Fortsatz 6 ein Innengewinde auf, in das der als Schraubbolzen ausgebildete Metallsockel 32 einzuschrauben ist.

Der Gummikopf 33 des Formstückes 3 hat einen größeren Durchmesser als der Fortsatz 6, wodurch auf der dem Motorblock 4 zugewandten Seite des Gummikopfes die Hinterschneidung 29 gebildet ist, in die die Bügel 30, 31 der den Gummikopf umgreifenden Halteklammer 28 mit Formschluß eingreifen. Gemäß Fig. 6 weisen die Bügel 30, 31 der Halteklammer 28 einen V-förmig nach innen abgeknickten Abschnitt auf, der in die Hinterschneidung 29 des Gummikopfes 33 einragt.

Gemäß einer anderen Ausführung weist der Gummikopf des Formstücks einen ovalförmigen Querschnitt auf.

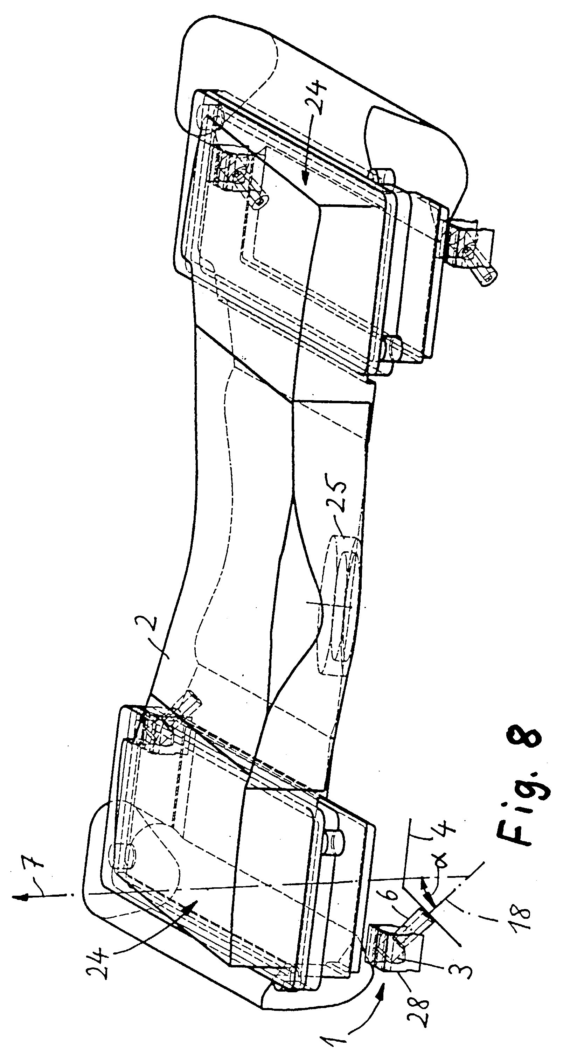

Fig. 7 ist zu entnehmen, daß die Halteklammer 28 in Draufsicht gesehen einen näherungsweise quadratischen Querschnitt aufweist.

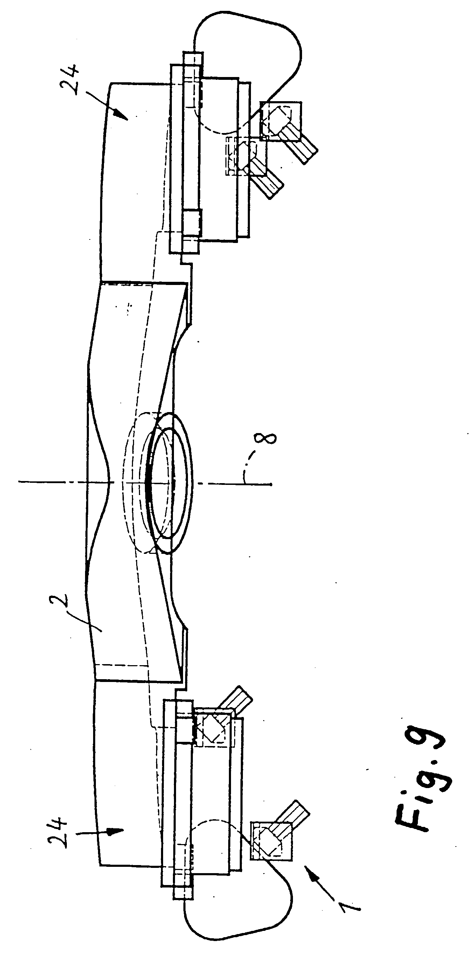

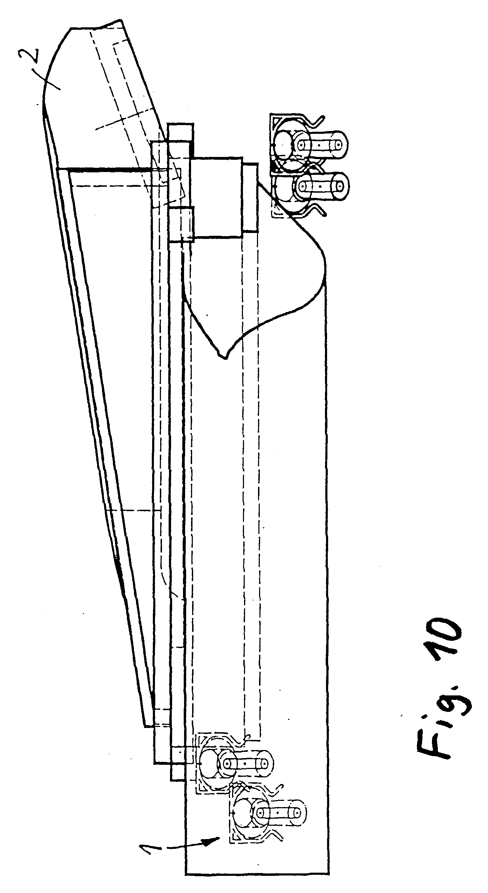

Die Fig. 8 bis 10 zeigen jeweils eine Gesamtdarstellung des Luftfilters 2 einschließlich Befestigungselementen 1. Durch die zwei seitlich angeordneten Filterelemente 24 wird Umgebungsluft angesaugt und gereinigt und anschließend über den Abgang 25 dem Ansaugkanal der Brennkraftmaschine zugeführt. In den Eckbereichen des Luftfilters 2 sind die Befestigungselemente 1 vorgesehen, über die der Luftfilter 2 am Motorblock 4 gehalten ist. Die Längsachsen 18 der Fortsätze 6 schließen mit der Löserichtung 7 den Winkel α ein; es kann gegebenenfalls angezeigt sein, daß die vier Fortsätze 6 jeweils in einem unterschiedlichen Winkel zur Löserichtung 7 angeordnet sind. Wie Fig. 9 zu entnehmen, können die im Bereich eines Filterelementes 24 auf gegenüberliegenden Seiten angeordneten Befestigungselemente 1 einen unterschiedlichen Abstand zur Mittelebene 8 aufweisen. Aus Fig. 9 sowie aus Fig. 10 geht außerdem hervor, daß die Befestigungselemente 1 in unterschiedlicher topographischer Höhe angeordnet sein können.

## Patentansprüche

1. Schwingungsdämpfendes Befestigungselement zur Halterung eines Bauteils an einem Halteteil einer Brennkraftmaschine, insbesondere zur Halterung eines Luftfilters am Motorgehäuse der Brennkraftmaschine, mit mindestens einem elastischen Formstück (3), das mit je einem am Halteteil (4) befestigten Fortsatz (6) verbunden ist und das in Löserichtung (7) des Bauteils (2) mit elastisch nachgiebigem Formschluß gehalten ist,
dadurch gekennzeichnet, daß die Löserichtung (7) des Bauteils (2) eine zwangsweise vorgegebene Löserichtung ist, in der auch das elastische Formstück (3) unter Überwindung des elastisch nachgiebigen Formschlusses von dem Fortsatz (6) oder von dem Bauteil (2) zu lösen ist und die Längsachse (18) jedes Fortsatzes (6) mit der Löserichtung (7) des Bauteils (2) einen Winkel (α) zwischen 12° und 60° einschließt.

2. Befestigungselement nach Anspruch 1,
dadurch gekennzeichnet, daß der Winkel (α) zwischen Fortsatz (6) und Löserichtung (7) 20° bis 50° beträgt.

3. Befestigungselement nach Anspruch 1 oder 2,
dadurch gekennzeichnet, daß das elastische Formstück (3) eine Ausnehmung (5) aufweist, in die der Fortsatz (6) in Löserichtung (7) mit Formschluß eingesteckt ist.

4. Befestigungselement nach Anspruch 3,
dadurch gekennzeichnet, daß der Fortsatz (6) spielfrei in der Ausnehmung (5) gehalten ist.

5. Befestigungselement nach Anspruch 3 oder 4,
dadurch gekennzeichnet, daß das Formstück (3) im Querschnitt Dreiecksform aufweist, wobei die Ausnehmung (5) etwa lotrecht an der Längsseite (10) des Dreiecks angeordnet ist.

6. Befestigungselement nach einem der Ansprüche 3 bis 5,
dadurch gekennzeichnet, daß am Formstück (3) auf der dem Fortsatz (6) zugewandten Seite eine Spreizlippe (11) ausgebildet ist, die an der Mantelfläche (12) des in die Ausnehmung (5) einragenden Fortsatzes (6) anliegt und den Fortsatz (6) festklemmt.

7. Befestigungselement nach Anspruch 6,
dadurch gekennzeichnet, daß die Spreizlippe (11) in Form einer Leiste ausgebildet ist und eine Stirnseite (13) der Spreizlippe (11) an der Mantelfläche (12) des Fortsatzes (6) anliegt.

8. Befestigungselement nach Anspruch 6 oder 7,
dadurch gekennzeichnet, daß die Spreizlippe (11) auf der einer Mittelebene (8) des Bauteiles (2) abgewandten Seite des Fortsatzes (6) angeordnet ist und die Mittelebene (8) etwa lotrecht zur Oberfläche (9) des abzustützenden Bauteils (2) liegt.

9. Befestigungselement nach Anspruch 8,
dadurch gekennzeichnet, daß in das elastische Formstück (3) ein mit der Ausnehmung (5) kommunizierender Freiraum (21) eingebracht ist, der zwischen dem Grundkörper (27) des Formstücks (3) und der Spreizlippe (11) angeordnet ist.

10. Befestigungselement nach einem der Ansprüche 1 bis 9,
dadurch gekennzeichnet, daß der Fortsatz (6) als zylindrischer Dorn ausgebildet ist, der am Halteteil (4) angegossen ist.

11. Befestigungselement nach einem der Ansprüche 1 bis 10,
dadurch gekennzeichnet, daß eine Halteklammer (28) am abzustützenden Bauteil (2) vorgesehen ist und das Formstück (3) mit Formschluß von der Halteklammer (28) gehalten ist.

12. Befestigungselement nach Anspruch 11,
dadurch gekennzeichnet, daß das Formstück (3) eine Hinterschneidung (29) aufweist, in die zwei Bügel (30, 31) der Halteklammer (28) haltend eingreifen.

13. Befestigungselement nach Anspruch 11 oder 12,
dadurch gekennzeichnet, daß das Formstück (3) einen kreisförmigen Querschnitt aufweist.

14. Befestigungselement nach Anspruch 13,
dadurch gekennzeichnet, daß das Formstück (3) scheibenförmig ausgebildet ist.

15. Befestigungselement nach einem der Ansprüche 11 bis 14,
dadurch gekennzeichnet, daß das Formstück (3) unverlierbar an dem Fortsatz (6) gehalten ist.

16. Befestigungselement nach einem der Ansprüche 11 bis 15,
dadurch gekennzeichnet, daß das Formstück (3) als Gummi/Metall-Puffer ausgebildet ist, welcher einen Metallsockel (32) aufweist, auf den ein Gummikopf (33) aufgesetzt ist.

17. Befestigungselement nach Anspruch 16,
dadurch gekennzeichnet, daß der Metallsockel (32) am Fortsatz (6) festgelegt ist, insbesondere mit dem Fortsatz (6) verschraubbar ist, und daß der Gummikopf (33) von der Halteklammer (28) umgriffen ist.

18. Befestigungselement nach einem der Ansprüche 1 bis 17,
dadurch gekennzeichnet, daß zumindest zwei das Bauteil (2) haltende Formstücke (3, 3') vorgesehen sind, die vorzugsweise an zwei Fortsätzen (6, 6') gehalten sind und bezüglich der Mittelebene (8) symmetrisch angeordnet sind.

19. Befestigungselement nach Anspruch 18,
dadurch gekennzeichnet, daß die zwei Fortsätze (6, 6') etwa rechtwinklig zueinander angeordnet sind.

## Revendications

1. Elément de fixation amortissant les vibrations, pour la fixation d'un composant sur une partie support d'un moteur à combustion interne, en particulier pour la fixation d'un filtre à air sur le carter-moteur du moteur à combustion interne, avec au moins une pièce profilée (3) élastique, reliée respectivement à un prolongement (6) fixé à la partie de maintien (4) et maintenue par une liaison à ajustement de forme à déformabilité élastique dans la direction de désolidarisation (7) du composant (2), caractérisé en ce que la direction de désolidarisation (7) du composant (2) est une direction de désolidarisation attribuée comme étant obligatoire, dans laquelle, également, la pièce profilée élastique (3) doit être désolidarisée en surmontant la liaison à ajustement de forme à déformabilité élastique venant du prolongement (6) ou du composant (2), et l'axe longitudinal (18) de chaque prolongement (6) faisant, avec la direction de désolidarisation (17) du composant (2), un angle (α) compris entre 12° et 60°.

2. Elément de fixation selon la revendication 1, caractérisé en ce que l'angle (α) entre le prolongement (6) et la direction de désolidarisation (7) est de 20° à 50°.

3. Elément de fixation selon la revendication 1 ou 2, caractérisé en ce que la pièce profilée élastique (3) présente un évidement (5), dans lequel le prolongement (6) est enfiché, avec une liaison à ajustement de forme, dans la direction de désolidarisation (7).

4. Elément de fixation selon la revendication 3, caractérisé en ce que le prolongement (6) est maintenu sans jeu dans l'évidement (5).

5. Elément de fixation selon la revendication 3 ou 4, caractérisé en ce que la pièce profilée (3) présente une section transversale de forme triangulaire, l'évidement (3) étant disposé à peu près perpendiculairement, sur le côté longitudinal (10) du triangle.

6. Elément de fixation selon l'une quelconque des revendications 3 à 5, caractérisé en ce que, sur la pièce profilée (3), sur la face tournée vers le prolongement (6), est réalisée une lèvre à écartement (11) appuyant sur la face d'enveloppe (12) du prolongement (6) pénétrant dans l'évidement (5) et bloquant, par serrage, le prolongement (6).

7. Elément de fixation selon la revendication 6, caractérisé en ce que la lèvre à écartement (11) est réalisée sous la forme d'une barrette et une face frontale (13) de la lèvre à écartement (11) appuie sur la face d'enveloppe (12) du prolongement (6).

8. Elément de fixation selon la revendication 5 ou 6, caractérisé en ce que la lèvre à écartement (11) est disposée sur la face de prolongement (6) qui est opposée à un plan médian (8) du composant (2), et le plan médian (8) est situé à peu près perpendiculairement par rapport à la surface (9) du composant (2) à soutenir.

9. Elément de fixation selon la revendication 8, caractérisé en ce qu'un espace libre (21) communiquant avec l'évidement (5), ménagé entre le corps de base (27) de la pièce profilée (3) et la lèvre à écartement (11), est créé dans la pièce profilée (3) élastique.

10. Elément de fixation selon l'une quelconque des revendications 1 à 9, caractérisé en ce que le prolongement (6) est réalisé sous la forme d'un mandrin cylindrique moulé d'un seul tenant sur la partie de maintien (4).

11. Elément de fixation selon l'une quelconque des revendications 1 à 10, caractérisé en ce qu'une pince de maintien (28) est prévue sur le composant (2) à soutenir, et la pièce profilée (3) est maintenue, par une liaison avec ajustement de forme exercée par la pince de maintien (28).

12. Elément de fixation selon la revendication 11, caractérisé en ce que la pièce profilée (3) présente une contre-dépouille (29) dans laquelle s'engagent, avec effet de maintien, deux branches (30, 31) de la pince de maintien (28).

13. Elément de fixation selon la revendication 11 ou 12, caractérisé en ce que la pièce profilée (3) présente une section transversale de forme circulaire.

14. Elément de fixation selon la revendication 13, caractérisé en ce que la pièce profilée (3) est de forme discoïde.

15. Elément de fixation selon l'une quelconque des revendications 11 à 14, caractérisé en ce que la pièce profilée (3) est maintenue de façon imperdable sur le prolongement (6).

16. Elément de fixation selon l'une quelconque des revendications 11 à 15, caractérisé en ce que la pièce profilée (3) est réalisée sous la forme de tampon caoutchouc/métal, présentant un socle métallique (32) sur lequel est placée une tête en caoutchouc (33).

17. Elément de fixation selon la revendication 16, caractérisé en ce que le socle métallique (32) est fixé sur le prolongement (6), en particulier est susceptible d'être vissé au prolongement (6), et en ce que la tête en caoutchouc (33) est entourée par la pince de maintien (28).

18. Elément de fixation selon l'une quelconque des revendications 1 à 17, caractérisé en ce qu'au moins deux pièces profilées (3, 3') maintenant le composant (2) sont prévues, maintenues de préférence sur deux prolongements (6, 6') et disposées symétriquement par rapport au plan médian (8).

19. Elément de fixation selon la revendication 18, caractérisé en ce que les deux prolongements (6, 6') sont disposés à peu près à angle droit à l'un par rapport à l'autre.

## Claims

1. Vibration-damping attachment element for holding a component to a support member of an internal-combustion engine, particularly for holding an air-filter on the engine housing of the internal-combustion engine, with one or more flexible adapting pieces (3), each of which is connected to a projection (6) attached onto the support member, and is held such that it is flexible, in the direction of release of the component (2), and formlocking,
characterized in that the direction (7) of release of the component (2) is inevitably a preset direction of release in which the flexible adapting piece (3) is also released from the projection (6) or from the component (2) by force on the elastically flexible fit, and the lengthwise axis (18), of each projection (6), encloses, with the direction (7) of release of the component (2), an angle (α) of between 12° and 60°.

2. Attachment element in accordance with claim 1,
characterized in that the angle (α) between projection (6) and direction (7) of release is from 20° to 50°.

3. Attachment element in accordance with claim 1 or 2,
characterized in that the flexible adapting piece (3) has a recess (5) into which the projection (6) is inserted, formlocking, in the direction (7) of release.

4. Attachment element in accordance with claim 3,
characterized in that the projection (6) is held without play in the recess (5).

5. Attachment element in accordance with claim 3 or 4,
characterized in that the adapting piece (3) has a triangular form in cross-section, whereby the recess (5) is disposed approximately vertical to the long side (10) of the triangle.

6. Attachment element in accordance with any one of claims 3 to 5,
characterized in that a spreading lip (11) is developed on the adapting piece (3) on the side facing the projection (6), the said spreading lip (11) lying on the surface (12) of the projection (6), which extends into the recess (5), clamping the projection (6).

7. Attachment element in accordance with claim 6,
characterized in that the spreading lip (11) is developed in the form of a fillet and a front face (13) of the spreading lip (11) lies on the surface (12) of the projection (6).

8. Attachment element in accordance with claim 6 or 7,
characterized in that the spreading lip (11) is disposed on a side, of the projection (6), which faces away from a central plane (8) of the component (2), and in that the central plane (8) is approximately perpendicular to the surface (9) of the component (2) to be supported.

9. Attachment element in accordance with claim 8,
characterized in that a cavity (21), running into the recess (5), is applied to the flexible adapting piece (3), the said cavity (21) being disposed between the body (27) of the adapting piece (3) and the spreading lip (11).

10. Attachment element in accordance with one of claims 1 to 9,
characterized in that the projection (6) is developed as a cylindrical pin which is cast on the support member (4).

11. Attachment element in accordance with any one of claims 1 to 10,
characterized in that a retaining clip (28) is provided on the component (2) to be supported, and the adapting piece (3) is held by the retaining clip (28) in a formlocking manner.

12. Attachment element in accordance with claim 11,
characterized in that the adapting piece (3) has an undercut (29) in which two brackets (30, 31) of the retaining clip (28) engage.

13. Attachment element in accordance with claim 11 or 12,
characterized in that the adapting piece (3) is round in cross-section.

14. Attachment element in accordance with claim 13,
characterized in that the adapting piece (3) is developed in the form of a disk.

15. Attachment element in accordance with any one of claims 11 to 14,
characterized in that the adapting piece (3) is undetachably held on the projection (6).

16. Attachment element in accordance with any one of claims 11 to 15,
characterized in that the adapting piece (3) is developed as a rubber/metal cushion which has a metal base (32) on which a rubber head (33) is set.

17. Attachment element in accordance with claim 16,
characterized in that the metal base (32) is attached onto the projection (6), particularly screwed onto the projection (6), and that the rubber head (33) is clasped by the retaining clip (28).

18. Attachment element in accordance with any one of claims 1 to 17,
characterized in that at least two adapting pieces (3, 3'), which hold the component (2), are provided, the said adapting pieces preferably being held on two projections (6, 6') and being symmetrically arranged in relation to the central plane (8).

19. Attachment element in accordance with claim 18,
characterized in that the two projections (6, 6') are disposed approximately at right angles to each other.
